# EUROPEAN PATENT SPECIFICATION

(11) **EP 0 435 412 B1**
(45) Date of publication and mention of the grant of the patent: **20.03.1996**
(21) Application number: 90250315.0
(22) Date of filing: 19.12.1990
(51) Int. Cl.: B01D 53/56

(54) **Denitration catalyst for high-temperature exhaust gas**
Entstickungskatalysator für Abgase hoher Temperatur
Catalyseur de dénitrification pour gaz d'échappement de haute température

(30) Priority: 28.12.1989 JP 338733/89; 13.04.1990 JP 96265/90
(43) Date of publication of application: 03.07.1991
(73) Proprietor: MITSUBISHI JUKOGYO KABUSHIKI KAISHA, Tokyo 100 (JP)
(72) Inventor: Iida, Kouzo, c/o Hiroshima Technical Institute, Nishi-ku, Hiroshima, Hiroshima Pref. (JP); Obayashi, Yoshiaki, c/o Hiroshima Technical Inst., Nishi-ku, Hiroshima, Hiroshima Pref. (JP); Serizawa, Satoru, c/o Nagasaki Shipyard & Eng Wks, Nagasaki Nagasaki Pref. (JP)
(74) Representative: Meissner, Peter E., Dipl.-Ing.

(56) References cited:
- EP-A- 0 286 967
- EP-A- 0 376 025
- WO-A-88/02659

## Description

### FIELD OF THE INVENTION AND RELATED ART STATEMENT

The present invention relates to a catalyst for reducing nitrogen oxides (hereinafter referred to as "NOₓ") contained in a combustion exhaust gas to harmless nitrogen, and more specifically, it relates to a catalyst for reducing/decomposing NOₓ in an exhaust gas from a boiler or a gas turbine or a combustion exhaust gas exhausted from an industrial furnace or the like at a high temperature of 500°C or more in the presence of ammonia.

Now, a process for removing NOₓ from the combustion exhaust gas is mainly a dry catalytic reduction process which comprises adding ammonia to the exhaust gas, and then converting NOₓ into harmless nitrogen in the presence of a catalyst. In this process, many known catalysts can be used. One example of these catalysts is composed of a main component such as titanium oxide and an active metal component such as vanadium, tungsten or molybdenum.

However, such a type of catalyst is used in the exhaust gas temperature range of from 200 to 450°C, and in treating the exhaust gas having a temperature in excess of this range, the catalyst has the drawback that it cannot always exert sufficient activity owing to oxidation, decomposition and the like of added ammonia at such a high temperature.

From WO 88/02 659 it is known to use a zeolite catalyst in its acid form in the presence of ammonia for the removal of NOₓ from exhaust gases. The zeolite can be a ZSM-5 type having a silica to aluminium oxide molar ratio > 60. Metal oxide additives are possible, for example iron with a content of 4 wt % based on the catalyst. The operating temperature could be about 350 °C.

From EP-A-0376025 (priority : 14.12.88; published on 04.07.90) a method for removing nitrogen oxides is known using a catalyst of the mordenite-type carrying copper, iron as well as cerium and molybdenum.

### OBJECT AND SUMMARY OF THE INVENTION

An exhaust gas from a gas turbine or a glass melting furnace usually has a temperature of 500°C or more. It is believed that the exhaust gas from the gas turbine usually has a temperature of from 500 to 600°C and the exhaust gas from the glass melting furnace has a temperature of from 450 to 650°C.

Therefore, when such a high-temperature exhaust gas is treated by the use of the above-mentioned conventinal catalyst, it is necessary to lower the temperature of the exhaust gas by means of a heat exchanger or the like, which inconveniently makes a denitration system complicated.

In view of such situations, an object of the present invention is to provide a practical catalyst giving a high NOₓ removal ratio even at a high temperature of 500°C or more by which the above-mentioned drawback can be eliminated.

The present invention is directed to a denitration catalyst for a high-temperature exhaust gas which is used to catalytically reduce and remove nitrogen oxides (NOₓ) in the reaction temperature range of from 500 to 700°C in the process of adding an ammonia gas to the exhaust gas containing NOₓ, the aforesaid catalyst being characterized by carrying 0.5 to 10% by weight of cerium in terms of Ce₂O₃ on a high silica type zeolite in which the molar ratio of SiO₂/Al₂O₃ is 20 or more.

Furthermore, the present invention is also directed to a denitration catalyst for a high-temperature exhaust gas which is used to catalytically reduce and remove NOₓ in the reaction temperature range of from 500 to 700°C in the process of adding an ammonia gas to the exhaust gas containing NOₓ, the aforesaid catalyst being characterized by carrying 0.5 to 5% by weight of iron in terms of Fe₂O₃ on a high silica type zeolite in which the molar ratio of SiO₂/Al₂O₃ is 20 or more.

That is, the present invention is characterized in that the catalyst of the present invention contains the high silica type zeolite having excellent heat resistance as a carrier, though a conventional catalyst contains titanium oxide as the carrier, and in that the catalyst of the present invention carries the active component of cerium or iron on the carrier.

From the viewpoint of resistance to heat and SOₓ, it is preferred that the above-mentioned high silica type zeolite has the crystal structure of ZSM-5 type and that the composition of the zeolite is such that the molar ratio of SiO₂/Al₂O₃ is 20 or more.

It is preferred from the viewpoint of performance that the amount of cerium to be used is in the range of from 1.0 to 10% by weight in terms of Ce₂O₃.

The catalyst can be prepared by impregnating the high silica type zeolite carrier with the aqueous solution of a nitrate, a halide or a sulfate of cerium, or effecting ion exchange, drying and then calcining the same at a temperature of from 300 to 600°C. The catalyst can be molded into grains, columns, honeycombs or the like in compliance with an intended purpose. With a view to heightening the strength of the catalyst, glass fiber or inorganic clay may be added to the catalyst.

One reason why the catalyst of the present invention can achieve the high activity at a high temperature of 500°C or more would be attributed to the solid acidity of the high silica type zeolite, though this presumption is not always certain.

As the catalyst using the high silica type zeolite which can remove NOₓ from an exhaust gas in the process of adding NH₃ thereto, there has been suggested, for example, a catalyst in which platinum or nickel is present in a ZSM-5 type high silica type zeolite (Japanese Patent Laid-open Publication No. 62-38225). However, with regrad to this kind of catalyst, data regarding gas temperatures of at most 427°C are merely shown in examples of the publication, and effects of the catalyst at high temperatues of 500°C and more are not referred to anywhere.

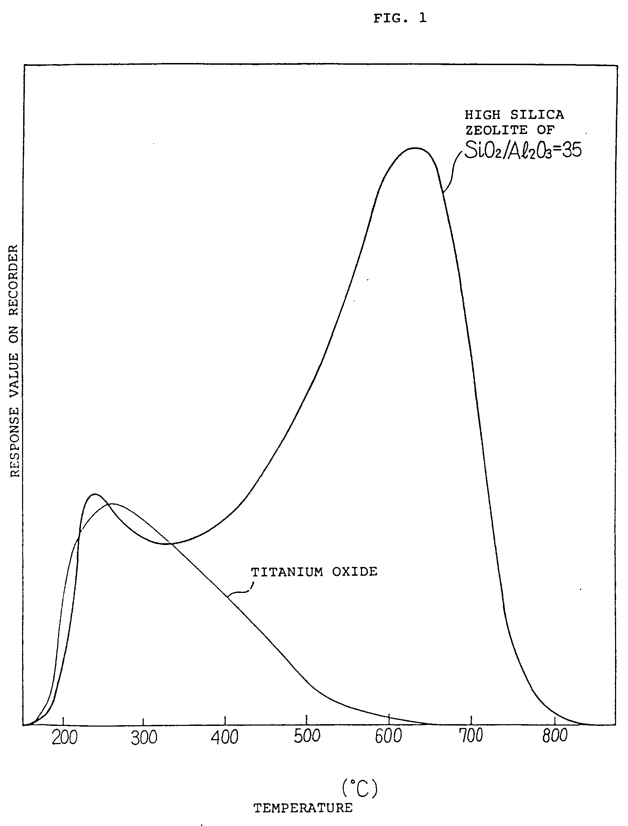

Fig. 1 attached hereto shows TPD chromatograms which have been obtained by measuring solid acidities of titanium oxide used in the conventional catalyst and the high silica type zeolite used in the catalyst of the present invention in accordance with the pyridine adsorption TPD process. The results in Fig. 1 indicate that the high silica type zeolite contains a larger amount of the acid and a larger number of strong acid points, as compared with titanium oxide. The catalytic reduction of NOₓ with ammonia is considered to proceed in accordance with the Redeal-Bley mechanism in which ammonia adsorbed by the catalyst is reacted with NOₓ in the gas. Therefore, in using the catalyst of the present invention to which the high silica type zeolite having the strong acid points seen in Fig. 1 is applied, the adsorption of ammonia onto the catalyst would be effectively performed even at a high temperature of 500°C or more, whereby the high activity of the catalyst would be maintained.

As described above, according to the present invention, there can be provided the catalyst for rendering NOₓ harmless by the selective reduction with NH₃ even at a high temperature of from 500 to 700°C, and it is definite that the industrial effect of the catalyst is remarkable.

### BRIEF DESCRIPTION OF THE DRAWINGS

Fig. 1 shows pyridine adsorption TPD chromatograms indicating solid acid characteristics of a high silica type zeolite used in the present invention and titanium oxide which is a conventional catalyst carrier.

### DETAILED DESCRIPTION OF PREFERRED EMBODIMENTS

Now, the present invention will be described in detail, but the scope of the present invention should not be limited to these examples.

### Preparation of Catalyst Samples 1 to 7:

A high silica type zeolite having a ZSM-5 type structure in which the molar ratio of SiO₂/Al₂O₃ was 35 was impregnated with an aqueous cerium nitrate solution, followed by drying at 100°C. Afterward, the zeolite was calcined at 600°C for 3 hours in an electric furnace, thereby obtaining catalyst powders having cerium contents of 0.3% by weight, 0.5% by weight, 1% by weight, 3% by weight, 5% by weight, 10% by weight and 15% by weight in terms of Ce₂O₃, respectively. The thus obtained catalyst powders were named Sample 1, Sample 2, Sample 3, Sample 4, Sample 5, Sample 6 and Sample 7, respectively.

### Preparation of Catalyst Samples 8 to 14:

The same procedure as in the preparation of the above-mentioned samples was effected except for the employment of a high silica type zeolite having a ZSM-5 type structure in which a molar ratio of SiO₂/Al₂O₃ was 25, in order to obtain catalyst powders having cerium contents of 0.3% by weight, 0.5% by weight, 1% by weight, 3% by weight, 5% by weight, 10% by weight and 15% by weight in terms of Ce₂O₃, respectively. The thus obtained catalyst powders were named Sample 8, Sample 9, Sample 10, Sample 11, Sample 12, Sample 13 and Sample 14, respectively.

### Experimental Example 1

For the obtained catalyst powders (Samples 1 to 14), denitration performance was inspected under the following conditions:

| | |
|---|---|
| Temperature of gas: | 500°C, 550°C |
| Amount of catalyst: | 10 mg |
| Amount of gas: | 100 Ncc/minute |

| Composition of gas: | |
|---|---|
| NO | 500 ppm |
| NH₃ | 500 ppm |
| O₂ | 5% |
| balance | He |

As a comparative example, a conventional TiO₂-WO₃ (8% by weight) powder (Sample 15) was also inspected in like manner. The results are set forth in Table 1.

It is apparent from the results in Table 1 that the catalysts (Samples 3 to 6 and 10 to 13) containing 1.0 to 10% by weight of cerium (in terms of Ce₂O₃) are more excellent in performance particularly at 550°C, as compared with the conventional catalyst (Sample 15) of the comparative example. However, when the content of cerium is in excess of 10% by weight (in terms of Ce₂O₃) (Samples 7 and 14), the improvement effect of the performance can scarcely be observed any more.

**Table 1**

| Catalyst | Denitration Ratio (%) | |
|---|---|---|
| | 500°C | 550°C |
| Sample 1 | 75 | 80 |
| Sample 2 | 82 | 85 |
| Sample 3 | 89 | 92 |
| Sample 4 | 95 | 96 |
| Sample 5 | 96 | 97 |
| Sample 6 | 96 | 97 |
| Sample 7 | 96 | 95 |
| Sample 8 | 73 | 78 |
| Sample 9 | 77 | 81 |
| Sample 10 | 83 | 89 |
| Sample 11 | 86 | 92 |
| Sample 12 | 88 | 93 |
| Sample 13 | 90 | 95 |
| Sample 14 | 90 | 94 |
| Sample 15 | 85 | 79 |

## Claims

1. A denitration catalyst for a high-temperature exhaust gas which is used to catalytically reduce and remove nitrogen oxides in the reaction temperature range of from 500 to 700 °C in the process of adding an ammonia gas to the exhaust gas containing the nitrogen oxides, said catalyst
carrying cerium on a high silica type zeolite namely with a crystal structure of ZSM-5 type in which the molar ratio of SiO₂/AL₂O₃ is 20 or more.

2. A denitration catalyst according to claim 1
characterized by
carrying 1.0 to 10 % by weight of cerium in terms of Ce₂O₃.

## Patentansprüche

1. Denitrierungskatalysator für Hochtemperaturabgase, mit dessen Hilfe Stickstoffoxide im Reaktionstemperaturbereich von 500-700 °C unter Zusatz von Ammoniakgas zu den die Stickstoffoxide enthaltenden Abgasen katalytisch reduziert und entfernt werden, wobei der Katalysator Cerium auf einem Zeolith mit hohem Siliciumdioxidgehalt und einer Kristallstruktur von ZSM-5 trägt, dessen Molverhältnis SiO₂/Al₂O₃ bei 20 oder darüber liegt.

2. Denitrierungskatalysator nach Anspruch 1, dadurch gekennzeichnet, daß er 1,0-10 Masse% Cerium als Ce₂O₃ trägt.

## Revendications

1. Catalyseur de dénitrification pour un gaz d'échappement à température élevée, qui est utilisé pour réduire, de façon catalytique, et éliminer des oxydes d'azote dans la plage de température réactionnelle de 500 à 700°C dans le processus d'addition d'un gaz ammoniac au gaz d'échappement contenant les oxydes d'azote, ledit catalyseur portant du cérium sur une zéolite du type à teneur élevée en silice, c'est-à-dire avec une structure cristalline de type ZSM-5 dans laquelle le rapport molaire de SiO₂/Al₂O₃ est 20 ou plus.

2. Catalyseur de dénitrification selon la revendication 1, caractérisé par la présence de 1,0 à 10 % en poids de cérium en termes de Ce₂O₃.
